# EUROPÄISCHE PATENTSCHRIFT

(11) **EP 0 509 622 B1**
(45) Veröffentlichungstag und Bekanntmachung des Hinweises auf die Patenterteilung: **13.12.1995**
(21) Anmeldenummer: 92250088.9
(22) Anmeldetag: 16.04.1992
(51) Int. Cl.: B01J 20/34, C01B 31/08

(54) **Vorrichtung zur Behandlung riesel- oder fliessfähiger Stoffe, insbesondere zur Reaktivierung von Aktivkohle in einem indirekt beheizten Reaktor**
Apparatus for treatment of free-flowing or fluid substances, particularly for reactivating of active carbon in an indirect heated reactor
Appareil pour le traitement de substances à écoulement facile ou fluide, en particulier pour la réactivation de charbon, actif dans un réacteur à chauffage indirect

(30) Priorität: 17.04.1991 DE 4112935
(43) Veröffentlichungstag der Anmeldung: 21.10.1992
(73) Patentinhaber: KETTENBAUER GMBH & CO. Verfahrenstechnik, D-79730 Murg (DE)
(72) Erfinder: Kettenbauer, Franz, W-7886 Murg/Baden (DE)
(74) Vertreter: Ninnemann, Detlef, Dipl.-Ing.

(56) Entgegenhaltungen:
- FR-A- 2 271 171
- FR-A- 2 346 043
- US-A- 1 784 536
- US-A- 2 148 827
- US-A- 2 430 056

## Beschreibung

Die Erfindung betrifft ein Verfahren zur Behandlung riesel- oder fließfähiger Stoffe nach dem Oberbegriff des Anspruchs 1 sowie eine Vorrichtung zur Durchführung dieses Verfahrens.

Es sind verschiedene Verfahren zur Behandlung von Stoffen zu deren Reaktivierung und/oder Regenerierung und/oder Dekontaminierung bekannt, bei denen die zu behandelnden Stoffe in einem Reaktor erhitzt werden. Dabei erfolgt eine Verdampfung der Kontaminations- oder organischen Bestandteile der zu behandelnden Stoffe.

Die DE-OS 1 442 730 beschreibt eine Vorrichtung zum Erwärmen eines körnigen Materials, die eine schmale, als Fallschacht ausgebildete und von außen beheizte Reaktorkammer aufweist. Das in die Reaktorkammer kontinuierlich eingegebene Material wird beim freien Fall durch die Reaktorkammer erwärmt.

Aus der AT-PS 363 449 ist eine Vorrichtung für die kontinuierliche Wärmebehandlung von Feststoffen bekannt, die aus einem indirekt beheizten Reaktorschacht besteht, der an seinem oberen Ende einen Einlaß und an seinem Bodenteil einen Auslaß für den zu behandelnden Feststoff sowie eine Anzahl nach unten geneigter Ablenkplatten aufweist. Dabei weisen die Ablenkplatten Durchlässe für den Durchtritt von Gasen auf, die sich unterhalb der Ablenkplatten sammeln, um eine Zirkulation der Gase vom Bodenteil in Richtung des oberen Teils und umgekehrt zu ermöglichen. Durch die Verwendung von Ablenkplatten wird der zu behandelnde Feststoff beim Durchgang durch den Reaktor mehrfach umgeschichtet, was zu einer vorteilhaften Vergrößerung der Reaktionsfläche, d.h. der Oberfläche des thermisch zu behandelnden Stoffes führt.

Diese Verfahren dienen im wesentlichen allein der Wärmebehandlung der zu behandelnden riesel- oder fließfähigen Stoffe. Eine weitergehende Behandlung der Stoffe, etwa durch Durchmischung mit einem gas- oder dampfförmigen Prozeßmedium ist nicht vorgesehen. So ist es jedoch beispielsweise für die Reaktivierung von Aktivkohle von Vorteil, der Aktivkohle über eine rein thermische Behandlung hinaus Wasserdampf zuzuführen.

Aus der FR-A 2 346 043 ist ein Verfahren zur Regenerierung von Aktivkohle in einem Reaktor mit einem senkrecht angeordneten Reaktorrohr bekannt, in dessen Innenraum ein weiteres Rohr angeordnet ist. Sowohl das Reaktorrohr als auch das innere Rohr weisen an ihren Seitenwänden Öffnungen auf, wobei an der Außenwand des inneren Rohres und an der Innenwand des Reaktorrohres im Bereich der Öffnungen jeweils nach unten gerichtete Leitbleche vorgesehen sind. Der Reaktor ist in einer Brennkammer angeordnet und wird durch Heizgase beheizt, die sowohl gegen die Außenwand des Reaktorrohres als auch gegen die Innenwand des inneren Rohres gerichtet sind.

Bei diesem Verfahren wird die zu behandelnde Aktivkohle über die Deckfläche des Reaktorrohres zugeführt und nach der Behandlung über dessen Bodenfläche abgegeben. Durch die Öffnungen an der Seitenwand des inneren Rohres wird während der Behandlung der Aktivkohle punktuell ein Prozeßmedium in das Reaktorrohr eingeleitet. Durch die Öffnungen an den Seitenwänden des Reaktorrohres entweichen Gase und Dämpfe, die bei der Behandlung der Aktivkohle entstehen, in die Brennkammer und vermischen sich dort mit den Heizgasen, wobei sie teilweise verbrennen.

Das vorbeschriebene Verfahren hat den Nachteil, daß die Heizgase über die Öffnungen in den Seitenwänden des Reaktorrohres während der Behandlung der Aktivkohle direkt mit dem zu behandelnden Stoff, dem Prozeßmedium und den entstehenden Abgasen in Berührung kommen. Insbesondere durch das Vermischen der Heizgase in der Brennkammer mit den Abgasen aus dem Reaktorrohr wird die gezielte Nachbehandlung dieser Stoffe erschwert. Durch das Eindringen der Heizgase in das Reaktorrohr treten außerdem in dem Reaktorrohr bereichsweise Zonen stärkerer Wärmeeinwirkung auf den zu behandelnden Stoff auf, so daß eine gleichmäßige Erwärmung der Aktivkohle nicht möglich ist.

Der Erfindung liegt die Aufgabe zu Grunde, ein Verfahren zur Behandlung riesel- oder fließfähiger Stoffe zu schaffen, das eine intensive Behandlung des zu behandelnden riesel- oder fließfähigen Stoffes mit einem gas- oder dampfförmigen Prozeßmedium gewährleistet, das eine zuverlässige und schnelle Entfernung der bei dieser Behandlung entstehenden flüchtigen Stoffe (z. B. Kontaminationsbestandteile) aus dem Reaktor ermöglicht und das eine isolierte Nachbehandlung bzw. Weiterverwendung der flüchtigen Stoffe einerseits sowie der Heißgase andererseits ermöglicht.

Diese Aufgabe wird erfindungsgemäß durch die kennzeichnenden Merkmale des Anspruchs 1 gelöst.

Die Erfindung beruht auf der Erkenntnis, daß das Verfahren zur Behandlung riesel- oder fließfähiger Stoffe wesentlich verbessert werden kann, wenn insbesondere die Heißgase und die flüchtigen Stoffe strikt voneinander getrennt werden, weil dadurch die Nachbehandlung bzw. Weiterverwendung der einzelnen Stoffe erleichtert wird. Die strikte Trennung der Heißgase von den flüchtigen Stoffen und dem Prozeßmedium wird dadurch erreicht, daß der Reaktorschacht nur an seinen geschlossenen äußeren Seitenwänden indirekt beheizt wird, wodurch keine Heißgase in den Reaktorschacht gelangen können, daß die flüchtigen Stoffe aus dem Reaktorschacht direkt in den inneren Schadgasschacht abgesaugt werden, wodurch sie nicht mit den Heißgasen in der Brennkammer in Berührung kommen können, und daß das Prozeßmedium durch eine vom Schadgasschacht getrennte Einrichtung in den Reaktorschacht eingeleitet wird. Dabei wird durch die Zufuhr des Prozeßmediums in Gegenrichtung zur Strömungsrichtung des riesel- oder fließfähigen Stoffes eine besonders intensive Reaktion während der Behandlung ermöglicht, so daß ein hoher Gesamtwirkungsgrad der Anlage gewährleistet ist.

Das erfindungsgemäße Verfahren hat den Vorteil, daß die Heißgase, die zur indirekten Erwärmung des Reaktorschachtes verwendet werden und die weder mit dem zu behandelnden Stoff noch mit den flüchtigen Stoffen in Berührung kommen, zur optimalen Ausnutzung der Prozeßwärme direkt in einen Vorwärmer und/oder in einen Wärmetauscher geleitet und anschließend an die Umgebung abgegeben werden können. Gleichzeitig ist eine gezielte Nachbereitung und/oder Filterung der flüchtigen Stoffe (z. B. mit Kontaminations- oder organischen Bestandteilen angereichertes Prozeßmedium) möglich, die durch die Öffnungen in dem Schadgasschacht schnell und zuverlässig abgesaugt werden.

Die erfindungsgemäße Lösung ermöglicht ferner eine intensive Durchmischung des zu behandelnden riesel- oder fließfähigen Stoffes mit einem den Reaktorschacht durchströmenden gas- oder dampfförmigen Prozeßmedium, das durch Einrichtungen im unteren Bereich des Reaktorschachtes in den Reaktorschacht eingegeben wird und innerhalb des Reaktorschachtes nach oben steigt. Dabei reagiert das Prozeßmedium mit dem zu behandelnden Stoff bzw. löst im zu behandelnden Stoff Reaktionen aus. Gegebenenfalls wird dem zu behandelnden Stoff dabei auch durch das Prozeßmedium Wärme zugeführt.

In einer bevorzugten Ausführungsform des erfindungsgemäßen Verfahrens ist der Schadgasschacht durch eine Sperre in zwei vertikale Abschnitte unterteilt. Dabei wird das gas- oder dampfförmige Prozeßmedium dem Reaktorschacht durch Öffnungen in den Seitenwänden des unteren Abschitts des Schadgasschachtes zugeführt, insbesondere in den im Reaktorschacht befindlichen zu behandelnden Stoff eingedüst. Die entstandenen flüchtigen Stoffe werden durch Öffnungen in den Seitenwänden des oberen Abschnitts des Schadgasschachtes aus dem Reaktorschacht abgesaugt. Durch diese Ausführung des Schadgasschachtes wird ein Zuführen des Prozeßmediums in den Reaktorschacht ohne zusätzliche Einrichtungen ermöglicht.

Eine Vorrichtung zur Durchführung des erfindungsgemäßen Verfahrens ist durch die Merkmale des Anspruches 3 gekennzeichnet.

Der nur an seinen äußeren Seitenwänden indirekt beheizte Reaktor gemäß Anspruch 3 zeichnet sich insbesondere durch einen im Inneren des Reaktorschachtes angeordneten Schadgaschacht aus, der an seinen Seitenwänden Öffnungen zum Absaugen flüchtiger Stoffe aufweist, sowie durch im unteren Bereich des Reaktorschachtes angeordnete und von dem Schadgasschacht getrennte Einrichtungen zum Einleiten eines gas- oder dampfförmigen Prozeßmediums. Durch diese Maßnahmen wird die strikte Trennung der Heizgase von den flüchtigen Stoffen und dem Prozeßmedium ermöglicht, die für das erfindungsgemäße Verfahren charakteristisch ist.

Mit Vorteil ist der Schadgasschacht durch eine horizontale Sperre in zwei übereinander angeordnete Abschnitte unterteilt, in deren Seitenwänden Öffnungen vorgesehen sind. Dabei dienen die Öffnungen in den Seitenwänden des unteren Abschitts des Schadgasschachtes zum Eindüsen eines gas- oder dampfförmigen Prozeßmediums in den Reaktorschacht und die Öffnungen in den Seitenwänden des oberen Abschnitts des Schadgasschachtes zum Absaugen der entstandenen flüchtigen Stoffe aus dem Reaktorschacht.

In einer anderen vorteilhaften Ausgestaltung der erfindungsgemäßen Vorrichtung sind im unteren Bereich des Reaktorschachtes Leitungen mit eingebauten Düsen angeordnet, die mit einer Einrichtung zur Zufuhr eines gas- oder dampfförmiges Prozeßmediums verbunden sind. Durch die Düsen wird das Prozeßmedium dem Reaktorschacht zugeführt, insbesondere in den im Reaktorschacht befindlichen zu behandelnden Stoff eingedüst. Die Leitungen sind insbesondere ringförmig um den Schadgasschacht angeordnet und gewährleisten eine enge Durchmischung von Prozeßmedium und zu behandelndem Stoff.

Der Schadgasschacht ist vorzugsweise abluftseitig mit einer thermischen Nachbrennkammer zur Nachbehandlung des mit organischen Bestandteilen angereicherten Prozeßmediums verbunden. In der thermischen Nachbrennkammer werden die organischen Bestandteile bei hohen Temperaturen von beispielsweise 1200° C vollständig verbrannt.

Es liegt im Rahmen der Erfindung, daß die Seitenwände des Reaktorschachtes indirekt beheizt sind. Dies erfolgt bevorzugt durch die Zufuhr von Heißgasen, die von außerhalb des Reaktorschachtes auf dessen Seitenwände gerichtet sind. Zum Heizen des Reaktorschachtes werden handelsübliche Brenner wie etwa Diffusionsbrenner verwendet. Der Einsatz derartiger Brenner ist problemlos, da die Brenner auf Grund des indirekten Heizvorgangs mit den unter Umständen aggressiven Gasen im Inneren des Reaktorschachtes nicht in Berührung kommen und somit keine erhöhten Anforderungen an die Brenner gestellt werden.

Die Zufuhr der Heißgase an die beheizten Seitenwände erfolgt bevorzugt vom Boden des Reaktorschachtes aus. Dies ermöglicht eine Temperatursteigerung vom Boden zur Decke des Reaktorschachtes, so daß der von der Deckfläche des Reaktorschachtes zugeführte zu behandelnde Stoff steigender Prozeßwärme ausgesetzt wird.

Es ist denkbar, daß dem zu behandelnden Stoff auch durch das gas- oder dampfförmige Prozeßmedium Wärme zugeführt wird.

Eine weitere vorteilhafte Ausgestaltung der erfindungsgemäßen Lösung ist dadurch gekennzeichnet, daß sich von den Seitenwänden des Schadgasschachtes schräg nach unten und in Richtung der Seitenwände des Reaktorschachtes flächenförmigen Bauteile erstrecken, die mit wahlweise unterschiedlicher Neigung an den Seitenwänden des Schadgasschachtes lose eingehängt sind und als Leiteinrichtungen dienen.

Die Anordnung flächenförmiger Leiteinrichtungen ermöglicht eine gezielte Umschichtung des zu behandelnden Stoffes, so daß eine große Reaktionsfläche des zu behandelnden Stoffes vorhanden ist. Weiter wird durch die Zuführung des zu behandelnden Stoffes zu den Seitenwänden des Reaktorschachtes dieser der Prozeßwärme der beheizten Seitenwände des Reaktorschachtes ausgesetzt. Die kaskadenartig übereinander am Schadgasschacht angeordneten flächenförmigen Leiteinrichtungen verlängern zudem die Prozeßstrecke, so daß ein einziger Durchlauf durch einen Reaktor ausreicht, um sämtliche Partikel des zu behandelnden Stoffes einer ausreichenden Durchmischung mit dem Prozeßmedium bzw. thermischen Behandlung auszusetzen.

Mit besonderem Vorteil sind die Öffnungen des Schadgasschachtes unterhalb der flächenförmigen Bauteile angeordnet. Unter diesen stauen sich naturgemäß die nach oben steigenden flüchtigen Stoffe, insbesondere die Kontaminations- oder organischen Bestandteile, so daß ein Absaugen der flüchtigen Stoffe besonders einfach und sicher erfolgen kann.

Zur Vermeidung von Explosionen im Reaktorinneren ist im Bereich der Deckfläche des Reaktors eine Einrichtung zur Zufuhr von Inertgas angeordnet. Das zugeführte Intergas bewirkt eine Absperrung von Sauerstoff aus der Atmosphäre, so daß im Reaktorschacht keine explosionsgefährlichen Gasmischungen entstehen.

In einer bevorzugten Ausführungsform der Erfindung sind der Reaktorschacht sowie der Schadgasschacht quader- oder rohrförmig ausgebildet. Die quader- oder rohrförmige Ausbildung des Reaktorschachtes und des Schadgasschachtes ermöglicht eine zentrische und geometrisch elegante Anordnung des Schadgasschachtes innerhalb des Reaktorschachtes. Insbesondere die Verwendung eines runden Schadgasschachtes ermöglicht auf Grund der überall stetigen Oberfläche des Schadgasschachtes eine gleichmäßige Verteilung der Öffnungen und damit ein zuverlässiges Absaugen der flüchtigen Stoffe.

Es liegt im Rahmen der Erfindung, daß einer oder mehrere Reaktoren in einer Reaktor-Brennkammer angeordnet sind, wobei in der Reaktor-Brennkammer Heißgase von außerhalb auf die Seitenwände des mindestens einen Reaktorschachtes gerichtet sind. Vorzugsweise sind dabei mehrere Reaktoren in gleichen Abständen zueinander und um die Reaktorschächte Diffusionsbrenner angeordnet. Die Anordnung mehrerer Reaktoren in der Reaktor-Brennkammer in gleichen Abständen zueinander sowie von Diffusionsbrennern zwischen den Reaktoren verringert die Anzahl notwendiger Brenner und ermöglicht eine Steigerung der Kompaktheit der Gesamtvorrichtung durch die Möglichkeit eines gedrängten Aufbaus im Innern der Reaktor-Brennkammer.

Eine weitere vorteilhafte Ausgestaltung der erfindungsgemäßen Lösung ist dadurch gekennzeichnet, daß die Verweildauer der Heißgase an den Seitenwänden der Reaktorschächte mittels in der Reaktor-Brennkammer angeordneter, als Schikanen wirkender Leiteinbauten erhöht wird. Durch den ohnehin kompakten Aufbau im Innern der Brennkammer ist bereits eine gesteigerte Verweildauer der Heißgase in der Brennkammer gewährleistet, die durch entsprechende Schikanen noch weiter erhöht werden kann, so daß die gegen die Seitenwände der Reaktorschächte gerichteten Heißgase mit geringer Geschwindigkeit an den Seitenwänden vorbeistreichen und somit eine optimale Wärmeübertragung gewährleistet ist.

Eine weitere bevorzugte Ausgestaltung der erfindungsgemäßen Lösung weist einen mit dem Reaktor thermisch gekoppelten Vorwärmer auf, in dem der zu behandelnde Stoff vorgewärmt wird. Vorzugsweise weist der Vorwärmer dabei analog dem Reaktor einen Schadgasschacht auf, der an seinen Seitenwänden Öffnungen zum Absaugen flüchtiger Schadstoffe besitzt und der abluftseitig mit einer thermischen Nachbrennkammer verbunden ist. Dies ermöglicht ein sicheres Absaugen der im Vorwärmer entstehenden Kontaminations- oder organischen Bestandteile. Leiteinrichtungen sind im Vorwärmer dagegen nicht vorgesehen.

Die Brennkammer des Vorwärmers ist in einer bevorzugten Ausführungsform zuluftseitig mit den abluftseitigen Öffnungen der Reaktor-Brennkammer verbunden. Auf diese Weise werden die Heißgase der Reaktor-Brennkammer direkt der Vorwärmer-Brennkammer zugeführt und zum Vorwärmen des zu behandelnden Stoffes verwendet. Eine eigene Heizung des Vorwärmers wird dadurch überflüssig.

Durch die Anordnung eines Wärmetauschers, der mit den Abgasen aus der Vorwärmer-Brennkammer bzw. bei Wegfall des Vorwärmers direkt mit den Abgasen aus der Reaktor-Brennkammer beaufschlagt wird, kann der gesamte Wirkungsgrad der Vorrichtung weiter gesteigert werden, da in dem Wärmetauscher das Prozeßmedium und/oder die der Reaktor-Brennkammer zugeführte Frischluft und/oder das Inertgas erwärmt werden können.

Eine weitere vorteilhafte Ausgestaltung der erfindungsgemäßen Lösung ist dadurch gekennzeichnet, daß die Zusammensetzung des abgeleiteten Prozeßmediums erfaßt und die Zufuhr des gas- oder dampfförmigen Prozeßmediums zum Reaktor in Abhängigkeit von der Zusammensetzung des abgeleiteten Prozeßmediums geregelt wird.

Für beispielsweise Sauerstoff oder Luft als Prozeßmedium kann durch Erfassen des Sauerstoffgehalts des abgeführten Prozeßmediums das zugeführte Prozeßmedium gezielt gesteuert werden, um einen optimalen Austrag organischer oder anorganischer Stoffteile aus dem zu behandelnden Stoff zu gewährleisten. Dadurch ist eine gezielte Zufuhr des Prozeßmediums möglich, so daß nur soviel Prozeßmedium zugeführt werden muß, wie tatsächlich zur Dekontaminierung oder Regenerierung bzw. Reaktivierung des Stoffes erforderlich ist. Auf diese Weise wird die Menge des zu entsorgenden Prozeßmediums erheblich herabgesetzt, so daß der Filteraufwand deutlich vermindert werden kann.

Die erfindungsgemäße Vorrichtung kann insbesondere zur Reaktivierung von Aktivkohle, zur Reaktivierung eines chemischen Anhydrits oder von Rea-Gips, zur Regenerierung von Gießereisand und zur Dekontamination kontaminierter Böden, kontaminierter Schlacke usw. eingesetzt werden. In Abhängigkeit von dem zu behandelndem Stoff wird als Prozeßmedium bevorzugt Luft, reiner Sauerstoff oder Wasserdampf verwendet.

Weitere vorteilhafte Weiterbildungen der erfindungsgemäßen Vorrichtung sind in den verbleibenden Unteransprüchen gekennzeichnet.

Die Erfindung soll nachfolgend unter Bezugnahme auf die Zeichnungen an mehreren Ausführungsbeispielen näher erläutert werden.

Es zeigen
- Figur 1: einen schematischen Längsschnitt durch einen erfindungsgemäßen Reaktor,
- Figur 2: einen Querschnitt durch einen Reaktor gemäß Figur 1 entlang der Linie A-A,
- Figur 3: einen schematischen Längsschnitt durch den unteren Bereich eines weiteren erfindungsgemäßen Reaktors,
- Figur 4: einen schematischen Längsschnitt durch eine Reaktor-Brennkammer mit drei Reaktoren,
- Figur 5: eine schematische Darstellung eines Reaktors gemäß Figur 3 und eines Vorwärmers,
- Figur 6: ein Fließschema einer Reaktoranlage zum Reaktivieren von Aktivkohle.

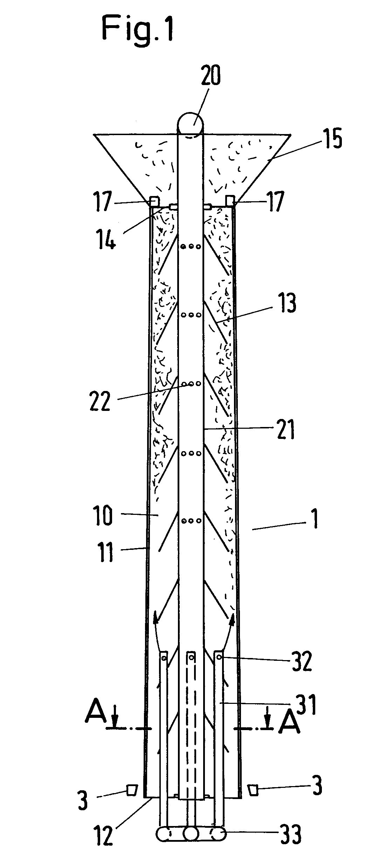

Der Reaktor 1 besteht gemäß Figur 1 aus einem Reaktorschacht 10 mit rundem Querschnitt. Der im Querschnitt runde Reaktorschacht 10 wird im folgenden als Reaktorrohr 10 und die Seitenwand 11 des Reaktorschachtes 10 als Reaktorwand 11 bezeichnet.

Innerhalb des Reaktorrohres 10 verläuft zentrisch und entlang dessen Mittelachse ein im Querschnitt ebenfalls runder Schadgasschacht 20 mit einer Seitenwand 21, die Öffnungen 22 aufweist. Die Öffnungen 22 sind im wesentlichen regelmäßig über die Länge und den Umfang des Schadgasrohres 20 verteilt. Der Schadgasschacht 20 wird im folgenden als Schadgasrohr 20 und seine Seitenwand 21 als Schadgasrohrwand 21 bezeichnet.

Im Innenraum des Reaktorrohres 10, d.h. zwischen der Schadgasrohrwand 21 und der Reaktorwand 11 sind Leiteinrichtungen 13 vorgesehen, die in dem dargestellten Ausführungsbeispiel als kreisförmige, zur Bodenfläche 12 des Reaktors 1 geneigte Leitbleche ausgebildet sind. Die Leiteinrichtungen 13 sind in die Schadgasrohrwand 21 lose eingehängt, um unterschiedliche Dehnungen der Leiteinrichtungen 13 auszugleichen. Auch ist es durch das lose Einhängen der Leiteinrichtungen 13 in die Schadgasrohrwand 21 in einfacher Weise möglich, die Leiteinrichtungen auszuwechseln und in Abhängigkeit von dem zu behandelnden Stoff Leiteinrichtungen unterschiedlicher Neigung vorzusehen.

Die Leiteinrichtungen 13 erstrecken sich von der Schadgasrohrwand 21 in Richtung der Reaktorwand 11, wobei ein hinreichend großer Spalt zwischen den äußeren Enden der Leitbleche 13 und der Reaktorwand 11 bestehen bleibt, so daß ein über die Deckfläche 14 des Reaktors zugeführter zu behandelnder Stoff durch diese Spalte hindurchtreten kann.

Im unteren Bereich des Reaktorrohres sind um das Schadgasrohr 20 vier Verteilerrohre 31 mit eingebauten Düsen 32 angeordnet, die mit einer Ringleitung 33 verbunden sind, die mit einer in Figur 1 nicht dargestellten Rohrleitung 40 zur Zufuhr eines gas- oder dampfförmiges Prozeßmediums, insbesondere Luft, Sauerstoff oder Wasserdampf verbunden ist.

Das obere Ende des Schadgasrohres 20 ist über eine in Figur 1 nicht dargestellte Rohrleitung 41 mit einer ebenfalls nicht dargestellten thermischen Nachbrennkammer 9 verbunden. In der kontinuierlich betriebenen thermischen Nachbrennkammer 9 werden die im Abgasstrom enthaltenen organischen Stoffe bei einer Temperatur von 1.200° C und einem einzuhaltenden Sauerstoffgehalt von mindestens 6 Vol. % vollständig verbrannt.

Wie in Figur 1 schematisch dargestellt, wird die Seitenwand 11 des Reaktors 1 von außen mittels Reaktorbrennern 3, beispielsweise Diffusionsbrennern, beheizt. Die Reaktorbrenner 3 sind im Bereich der Bodenfläche 12 des Reaktorrohres 10 um das Reaktorrohr 10 herum angeordnet und aufwärts unter einem spitzen Winkel auf die Reaktorwand 11 gerichtet.

Oberhalb des Reaktors 1 ist ein Trichter 15 angeordnet, über den der zu behandelnde Stoff der Deckfläche 14 des Reaktors 1 zugeführt wird. Weiter ist im Bereich der Deckfläche 14 des Reaktors 1 ist eine ringförmige Einrichtung 17 zur Zufuhr von Inertgas angeordnet. Das zugeführte Inertgas sperrt das Reaktorrohr 10 gegen Sauerstoff aus der Atmosphäre ab.

Der über die Deckfläche 14 des Reaktors 1 dem Reaktorrohr 10 zugeführte zu behandelnde riesel- oder fließfähige Stoff wird durch die Leiteinrichtungen 13 jeweils in Richtung der beheizten Rohrwand 11 abgeleitet und dort einer intensiven thermischen Behandlung unterworfen. Dabei wird der zu behandelnde Stoff vielfach gewendet und durchmischt, so daß sämtliche Partikel des zu behandelnden Stoffes der thermischen Behandlung unterzogen werden. Weiter bewirken die Leiteinrichtungen 13 eine entsprechende Vergrößerung der Reaktionsfläche des zu behandelnden Stoffes, damit das zugeführte Prozeßmedium sämtliche Partikel des zu behandelnden Stoffes erreicht und damit der Behandlungseffekt größte Wirksamkeit erzielt.

Das über die Düsen 32 der Verteilerrohre 31 in das Reaktorrohr 10 bzw. in den im Reaktorrohr 10 befindlichen zu bearbeitenden Stoff eingedüste Prozeßmedium strömt durch das Reaktorrohr 10 im Gegenstrom nach oben, wobei es mit dem zu behandelnden Stoff durchmischt wird und/oder in diesen eindringt und mit diesem reagiert. Dadurch, daß das Prozeßmedium dem zu behandelnden Stoff im Gegenstrom zugeführt wird, wird der zu behandelnde Stoff beim Durchgang durch den Reaktor 1 mit zunehmend weniger Inhaltsstoffen einem zunehmend unverbrauchteren Prozeßmedium zugeführt.

Durch die in der Schadgasrohrwand 21 angeordneten Öffnungen 22 werden die dabei entstehenden flüchtigen Stoffe in das Schadgasrohr 20 eingesaugt und über die Rohrleitung 41 zu der thermischen Nachbrennkammer 9 geleitet. Die Öffnungen 22 der Schadgasrohrwand 21 befinden sich dabei vorzugsweise jeweils unterhalb der Leiteinrichtungen 13, da sich unterhalb dieser Einrichtungen 13 flüchtige Stoffe naturgemäß stauen und somit besonders einfach und vollstängig abgesaugt werden können.

Der behandelte Stoff wird dem Reaktorrohr 10 über die Bodenfläche 12 entnommen.

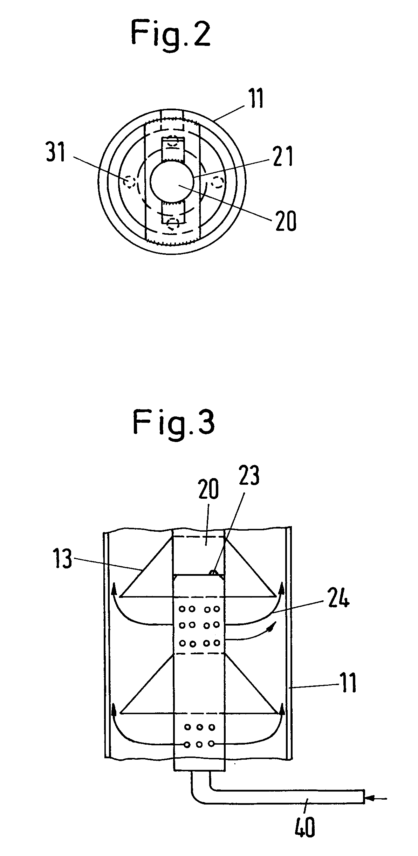

In einer alternativen Ausgestaltung des Reaktors ist das Schadgasrohr 20 gemäß Figur 3 durch eine Sperre 23 in zwei vertikale Abschnitte unterteilt. Unterhalb der Sperre 23 sind in der Schadgasrohrwand 21 zahlreiche Öffnungen 24 angeordnet. Der untere Abschnitt des Schadgasrohres ist mit einer Rohrleitung 40 zur Zufuhr eines Prozeßmediums verbunden. Auf die in Figur 1 dargestellten Verteilerrohre 31 und die Ringleitung 33 wird bei dieser Ausgestaltung des Reaktors verzichtet.

Das gas- oder dampfförmige Prozeßmedium wird über die Rohrleitung 40 dem unteren Abschnitt des Schadgasrohres zugeführt und über die im Unterteil der Schadgasrohrwand 21 angeordneten Öffnungen 24 in das Reaktorrohr 10 bzw. den im Reaktorrohr 10 befindlichen zu bearbeitende Stoff eingedüst. Es strömt anschließend durch das Reaktorrohr 10 im Gegenstrom nach oben, wobei es mit dem zu behandelnden Stoff reagiert. Durch die Öffnungen 22 im oberen Abschnitt der Schadgasrohrwand 21 werden die entstehenden flüchtigen Stoffe in das Schadgasrohr 20 eingesaugt und über die Rohrleitung 41 abgeleitet. Die Sperre 23 verhindert, daß das zugeführte Prozeßmedium sofort abgeleitet wird.

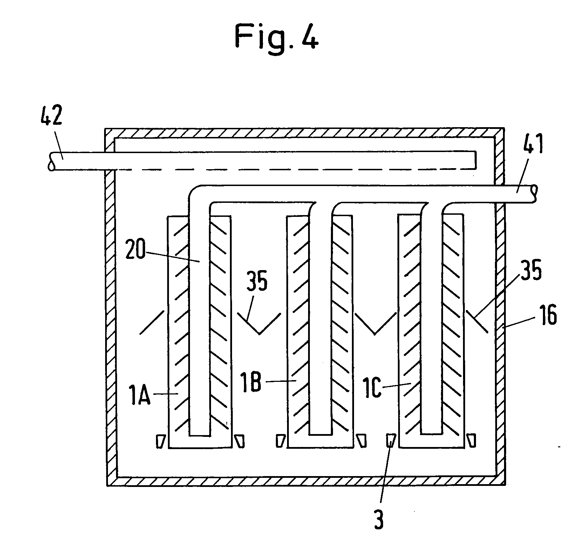

Figur 4 zeigt schematisch die Anordnung mehrerer Reaktoren 1A, 1B, 1C in einer Reaktor-Brennkammer 16. Um die Reaktoren 1A, 1B, 1C sind Reaktorbrenner 3 angeordnet. Zur Steigerung der Wirksamkeit der Behandlung des zu behandelnden Stoffes sind zwischen den Reaktoren 1A, 1B, 1C bzw. zwischen den Reaktoren 1A, 1B, 1C und der Reaktor-Brennkammer 16 geeignet geformte Schikanen 35 angeordnet, durch die die Verweilzeit der Prozeßwärme in der Reaktor-Brennkammer 16 erhöht wird, so daß eine hinreichende Erhitzung der Reaktorwände 11 erfolgt.

Die einzelnen Reaktoren 1A, 1B, 1C sind vorzugsweise an der Oberseite der Brennkammer 16 aufgehängt.

Im oberen Bereich der Reaktor-Brennkammer 16 mündet ein Wärmeableitungsrohr 42, welches die überschüssige Wärme der Reaktor-Brennkammer 16 aufnimmt und zu einem Wärmetauscher oder zu einem Vorwärmer weiterleitet. Die oberen Enden der Schadgasrohre 20 sind mit einer Rohrleitung 41 zum Ableiten der abgesaugten flüchtigen Stoffe verbunden. Die Trichter 15 zum Zuführen des zu behandelnden Stoffes sind in Figur 4 nicht dargestellt.

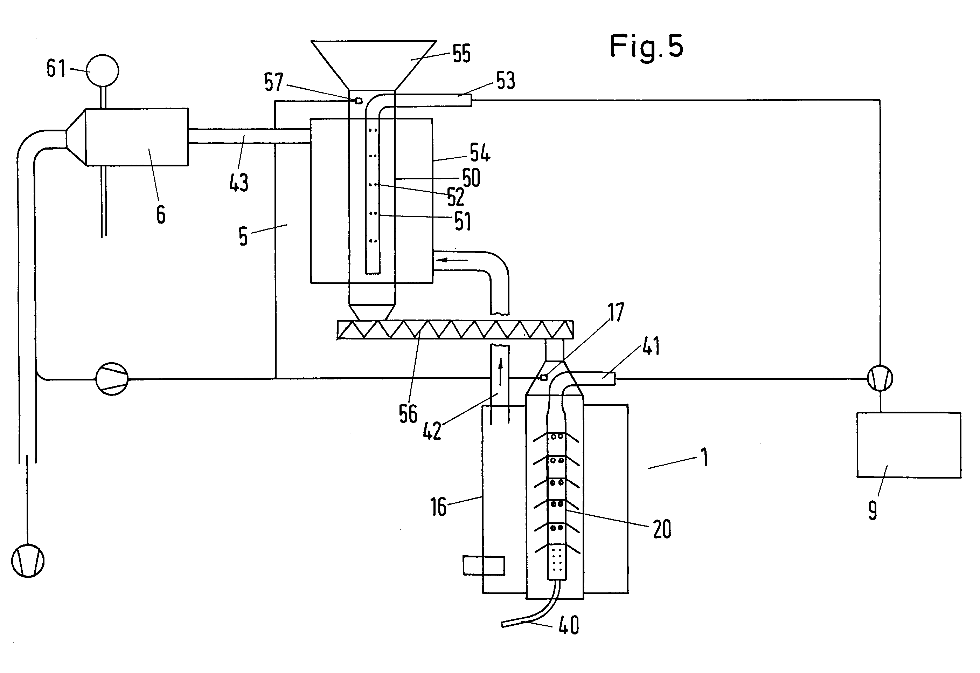

In Figur 5 sind schematisch ein Reaktor 1 gemäß Figur 3 und ein thermisch mit dem Reaktor 1 gekoppelter Vorwärmer 5 dargestellt.

Der Vorwärmer 5 besteht aus einem Vorwärmerrohr 50, in das der vorzuwärmende Stoff über einen Fülltrichter 55 eingegeben wird. Innerhalb des Vorwärmerrohrs 50 ist zentrisch ein Schadgasrohr 51 mit Öffnungen 52 zum Absaugen flüchtiger Stoffe angeordnet, welches abluftseitig über eine Rohrleitung 53 mit einer thermischen Nachbrennkammer 9 verbunden ist. Das Vorwärmerrohr 50 ist in einer Vorwärmer-Brennkammer 54 angeordnet. Unterhalb des Vorwärmers 5 befindet sich eine Förderschnecke 56, die den vorgewärmten Stoff aufnimmt und dem Reaktor 1 zuführt. Im Reaktor 1 wird der vorgewärmte Stoff in vorbeschriebener Weise behandelt.

Der Vorwärmer-Brennkammer 54 wird über das Wärmeableitungsrohr 42 die überschüssige Wärme der Reaktor-Brennkammer 16 zugeleitet. Die entsprechenden Heißgase kommen im Vorwärmer 5 mit dem zu bearbeitenden Stoff nicht in Berührung. Die über das Wärmeableitungsrohr 42 aufgenommene Heißluft der Vorwärmer-Brennkammer ist und bleibt frei von Schadstoffen und kann unmittelbar über eine Rohrleitung 43 einem Wärmetauscher 6 zugeführt und von diesem über einen Fortluftventilator an die Umgebung abgegeben werden. Der Wärmetauscher 6 ist mit der Zufuhr 61 für das Prozeßmedium verbunden, so daß im Wärmetauscher 6 das Prozeßmedium vorgewärmt werden kann.

Im Bereich der Deckfläche des Reaktors 1 sowie des Vorbrenners 5 befinden sich Einrichtungen 17 bzw. 57 zur Zufuhr von Inertgas. Das Inertgas wird in das Reaktorrohr 10 bzw. in das Vorwärmerrohr 50 eingedüst und sperrt das Reaktorrohr 10 bzw. das Vorwärmerrohr 50 gegen Sauerstoff aus der Atmosphäre ab. Dadurch wird verhindert, daß explosionsfähige Gasmischungen entstehen. In einer möglichen Ausgestaltung des Ausführungsbeispiels wird das Inertgas im Wärmetauscher 6 erwärmt, bevor es den Einrichtungen 17 bzw. 57 zugeführt wird.

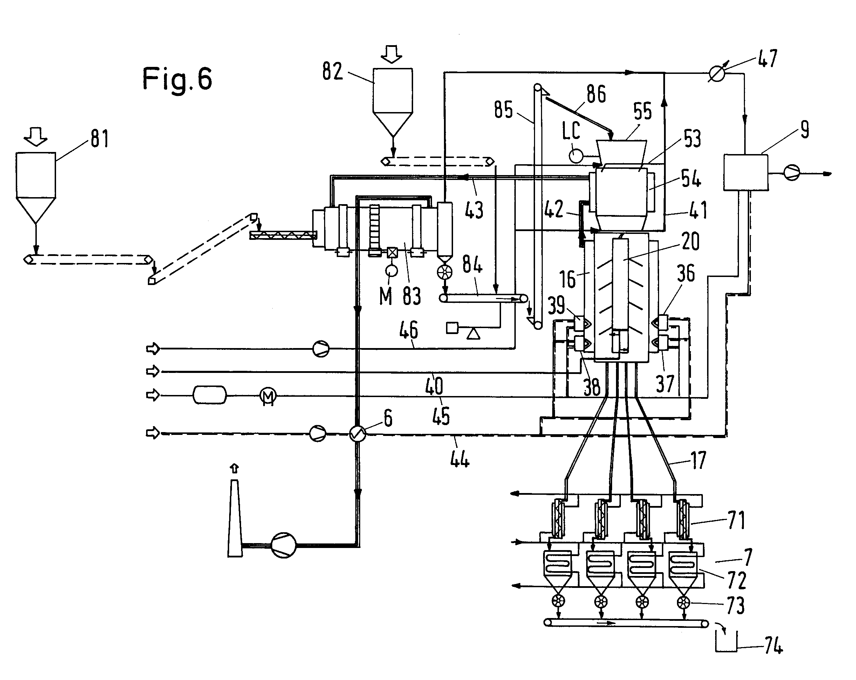

In Figur 6 ist schematisch eine Reaktoranlage zum Reaktivieren von Aktivkohle mit einem Reaktor 1 und einem Vorwärmer 5 gemäß Figur 5 dargestellt.

Die Reaktoranlage enthält einen Aufgabetrichter 81 für nasse Kohle und einen Aufgabetrichter 82 für trockene Kohle, von denen aus die zu reaktivierende Aktivkohle kontinuierlich oder in Chargen über eine Trockentrommel 83 und eine Bandwaage 84 bzw. direkt über die Bandwaage 84 einem Elevator 85 zugeführt wird, der die zu behandelnde Aktivkohle über eine Einlaufschnecke 86 und einen Fülltrichter 55 einem Vorwärmer 5 zuführt, in dem die zu reaktivierende Aktivkohle vorgewärmt wird.

Der Vorwärmer 5 steht thermisch mit der Reaktor-Brennkammer 16 in Verbindung. Insbesondere wird der Vorwärmer-Brennkammer 54 in oben beschriebener Weise über das Wärmeableitungsrohr 42 überschüssige Wärme der Reaktor-Brennkammer 16 zugeleitet. Die Heißgase der Vorwärmer-Brennkammer 54 werden über eine Rohrleitung 43 einem Wärmetauscher 6 zugeführt und von diesem über einen Fortluftventilator an die Umgebung abgegeben. In dem hier dargestellten Ausführungsbeispiel wird die Heißluft zusätzlich durch die Trockentrommel 83 geleitet, bevor sie dem Wärmetauscher 6 zugeführt wird.

Die beim Vorwärmen im Vorwärmer entstehenden flüchtigen Stoffe werden über eine Rohrleitung 53 einer technischen Nachbrennkammer 9 zugeführt.

Die im Vorwärmer 5 erwärmte Aktivkohle wird in den Reaktor 1 eingegeben. In der Reaktor-Brennkammer 16 befinden sich im Bereich des Bodens des Reaktors 1 Reaktorbrenner 36, 37, 38, 39, die über eine Frischluftleitung 44 mit Primärluft versorgt werden. Zusätzlich sind die Reaktorbrenner 36, 37, 38, 39 mit einer Brennstoffzuleitung 45 verbunden, über die sie mit einem geeigneten Brennstoff, vorzugsweise in Form eines brennbaren Gases, versorgt werden. Die Frischluftleitung 44 und die Brennstoffzuleitung 45 sind ebenfalls mit der thermischen Nachbrennkammer 9 verbunden und versorgen diese entsprechend mit Primärluft und Brennstoff.

Die zugeführte Frischluft wird vor Zuführung im Wärmetauscher 6 durch die aus der Vorwärmer-Brennkammer 54 abgeführten Heißgase erwärmt, so daß der Wirkungsgrad der Anlage weiter erhöht wird. Auch ist es denkbar, daß ebenfalls das Prozeßmedium im Wärmetauscher 6 vorgewärmt wird.

Über eine Inertgasleitung 46 wird dem Reaktor 1 sowie dem Vorbrenner 5 jeweils im Bereich der Deckfläche Inertgas zugeführt, so daß das Reaktorrohr 10 und das Vorwärmerrohr 50 gegen Sauerstoff aus der Atmosphäre abgesperrt sind und somit die Entstehung explosionsfähiger Gasmischungen verhindert wird.

Das Prozeßmedium Wasserdampf wird dem Reaktor 1 über die Rohrleitung 40 zugeführt, in beschriebener Weise in den Reaktor 1 eingegeben, über das Schadgasrohr 10 zusammen mit im Reaktor entstandenen flüchtigen Schadstoffen abgesaugt und über die Rohrleitung 41 einer thermischen Nachbrennkammer 9 zugeführt.

In der thermischen Nachbrennkammer 9 werden die bei der Reaktivierung der Aktivkohle entstandenen Schadgase ausgebrannt. Nach Passieren der thermischen Nachbrennkammer 9 wird der mit Schadstoffen angereicherte Wasserdampf einer nicht dargestellten Quenche zugeführt, in der die Gase aus der thermischen Nachbrennkammer 9 gekühlt werden. Daran schließt sich gegebenenfalls eine Dosiereinheit zur Zugabe von Kalkmilch und eine Kreuzstromwäsche zum Auswaschen der Chloride an, so daß die angefallenen organischen Verbindungen vollständig herausgefiltert werden.

In der Rohrleitung 41 ist wahlweise eine Meßsonde 47 zum Erfassen der Zusammensetzung und der Temperatur des mit Schadstoffen angereicherten Wasserdampfs angeordnet, die mit einem nicht dargestellten Regler zur Regelung der Zufuhr des Wasserdampfs verbunden ist. In Abhängigkeit von den Meßwerten der Meßsonde 47 wird der Durchsatz mit Wasserdampf erhöht bzw. herabgesetzt. Durch diese unmittelbare Einstellung des Durchsatzes des Prozeßmediums kann die Umwälzung des Prozeßmediums den tatsächlichen Gegebenheiten unmittelbar angepaßt werden, so daß gerade soviel Prozeßmedium zugeführt wird, wie zur Reaktivierung der Aktivkohle erforderlich ist.

Unterhalb des Reaktors 1 sind Auslauftrichter 17 angeordnet. Die Auslauftrichter 17 bestimmen die jeweilige Verweilzeit der zu reaktivierenden Aktivkohle im Reaktor 1 und bestimmen somit den Durchsatz bzw. die Leistung der Reaktoranlage.

Die reaktivierte Aktivkohle verläßt den Reaktor 1 über dessen Bodenfläche 12 und gelangt über die Auslauftrichter 17 zu einem Kühler 7. Hier wird die reaktivierte Aktivkohle mittels wassergekühlter Rohrförderschnecken 71 und wassergekühlter Schachtkühler 72 abgekühlt. Der Austrag wird aus dem Kühler 7 mittels Zellenradschleusen 73 ausgeführt und die abgekühlte, behandelte Aktivkohle anschließend einem Behälter 74 zur Wiederverwendung zugeführt.

Die Erfindung beschränkt sich in ihrer Ausführung nicht auf das vorstehend angegebene Ausführungsbeispiel. Vielmehr sind eine Anzahl von Varianten denkbar, welche von der dargestellten Lösung auch bei grundsätzlich anders gearteten Ausführungen Gebrauch machen.

## Patentansprüche

1. Verfahren zur Behandlung eines riesel- oder fließfähigen Stoffes mit einem indirekt beheizten Reaktor, der einen im wesentlichen senkrecht angeordneten Reaktorschacht aufweist, über dessen Deckfläche der zu behandelnde Stoff zugeführt und über dessen Bodenfläche der behandelte Stoff abgegeben wird, dessen Innenraum Leiteinrichtungen für den zu behandelnden Stoff enthält und innerhalb dessen mindestens ein Schadgasschacht angeordnet ist, der an seinen Seitenwänden Öffnungen aufweist, wobei ein gas- oder dampfförmiges Prozeßmedium durch eine im unteren Bereich des Reaktorschachtes angeordnete Einrichtung in den Reaktorschacht eingeleitet wird,
**dadurch gekennzeichnet**,
daß durch die Öffnungen (22) an den seitenwänden (21) des Schadgasschachtes (20) flüchtige Stoffe aus dem Reaktorschacht (10) abgesaugt werden, daß das Prozeßmedium durch eine vom Schadgasschacht (20) getrennte Einrichtung (24; 31 bis 33) in den Reaktorschacht (10) eingeleitet wird und den zu behandelnden Stoff im Gegenstrom umströmt und daß der Reaktorschacht (10) nur an seinen äußeren Seitenwänden (11) indirekt beheizt wird.

2. Verfahren nach Anspruch 1, **dadurch gekennzeichnet**, daß der Schadgasschacht (20) durch eine horizontale Sperre (23) in zwei übereinander angeordnete Abschnitte unterteilt ist, und daß durch Öffnungen (24) in den Seitenwänden des unteren Abschnitts das gas- oder dampfförmige Prozeßmedium dem Reaktorschacht (10) zugeführt und durch Öffnungen (22) in den Seitenwänden des oberen Abschnitts flüchtige Stoffe abgesaugt werden.

3. Vorrichtung zur Durchführung des Verfahrens nach Anspruch 1 oder 2, **gekennzeichnet durch** einen Reaktor (1) mit einem im wesentlichen senkrecht angeordneten, nur an seinen äußeren Seitenwänden (11) indirekt beheizten Reaktorschacht (10), der eine Deckfläche (14) zur Zufuhr des zu behandelnden Stoffs und eine Bodenfläche (12) zur Abgabe des behandelten Stoffs aufweist und in dessen Innenraum Leiteinrichtungen (13) sowie mindestens ein Schadgasschacht (20), der an seinen Seitenwänden Öffnungen (22) zum Absaugen flüchtiger Stoffe aufweist, angeordnet sind, und durch im unteren Bereich des Reaktorschachtes (10) angeordnete und vom Schadgasschacht (20) getrennte Einrichtungen (24, 31 bis 33) zum Einleiten eines gas- oder dampfförmigen Prozeßmediums.

4. Vorrichtung nach Anspruch 3, **dadurch gekennzeichnet**, daß der Schadgasschacht (20) mittels einer horizontalen Sperre (23) in zwei übereinander angeordnete Abschnitte unterteilt ist, in deren Seitenwänden Öffnungen (22, 24) vorgesehen sind.

5. Vorrichtung nach Anspruch 3 oder 4, **dadurch gekennzeichnet**, daß die im unteren Bereich des Reaktorschachtes (10) angeordnete Einrichtung aus Leitungen (31) mit eingebauten Düsen (32) besteht, die mit einer Einrichtung zur Zufuhr eines gas- oder dampfförmiges Prozeßmediums verbunden sind.

6. Vorrichtung nach mindestens einem der vorangehenden Ansprüche 3 bis 5, **dadurch gekennzeichnet**, daß der Schadgasschacht (20) abluftseitig mit einer thermischen Nachbrennkammer (9) verbunden ist.

7. Vorrichtung nach mindestens einem der vorangehenden Ansprüche 3 bis 6, **dadurch gekennzeichnet**, daß Heißgase von außerhalb des Reaktorschachts (10) auf dessen Seitenwände (11) gerichtet sind.

8. Vorrichtung nach mindestens einem der vorangehenden Ansprüche 3 bis 7, **dadurch gekennzeichnet**, daß sich von den Seitenwänden (21) des Schadgasschachtes (20) schräg nach unten und in Richtung der Seitenwände (11) des Reaktorschachtes (10) als Leiteinrichtungen dienende flächenförmigen Bauteile (13) erstrecken, die mit wahlweise unterschiedlicher Neigung an den Seitenwänden (21) des Schadgasschachtes (20) lose eingehängt sind.

9. Vorrichtung nach Anspruch 8, **dadurch gekennzeichnet**, daß die Öffnungen (22) des Schadgasschachtes (20) unterhalb der flächenförmigen Bauteile (13) angeordnet sind.

10. Vorrichtung nach mindestens einem der vorangehenden Ansprüche 3 bis 9, **dadurch gekennzeichnet**, daß im Bereich der Deckfläche (14) des Reaktors (1) eine Einrichtung (17) zur Zufuhr von Inertgas angeordnet ist.

11. Vorrichtung nach mindestens einem der vorangehenden Ansprüche 3 bis 10, **dadurch gekennzeichnet**, daß der Schadgasschacht (20) zentrisch innerhalb des Reaktorschachtes (10) entlang dessen Mittelachse verlaufend angeordnet ist und daß der Reaktorschacht (10) sowie der Schadgasschacht (20) quader- oder rohrförmig ausgebildet sind.

12. Vorrichtung nach mindestens einem der vorangehenden Ansprüche 3 bis 11, **dadurch gekennzeichnet**, daß in einer Reaktor-Brennkammer (16) mindestens ein Reaktor (1) angeordnet ist und daß in der Reaktor-Brennkammer (16) Heißgase von außerhalb auf die Seitenwände (11) des mindestens einen Reaktorschachtes (10) gerichtet sind.

13. Vorrichtung nach Anspruch 12, **dadurch gekennzeichnet**, daß in der Reaktor-Brennkammer (16) mehrere Reaktoren (1A, 1B, 1C) in gleichen Abständen zueinander und um die Reaktorschächte (10) Diffusionsbrenner (3) angeordnet sind und daß zwischen den Reaktoren (1A, 1B, 1C) sowie zwischen den Reaktoren (1A, 1B, 1C) und den Seitenwänden der Reaktor-Brennkammer (16) Leiteinbauten (35) vorgesehen sind, die die Heißgase gegen die Seitenwände (11) der Reaktorschächte (10) richten.

14. Vorrichtung nach Anspruch 12 oder 13, **dadurch gekennzeichnet**, daß die abluftseitigen Öffnungen (42) der Reaktor-Brennkammer mit einem Vorwärmer (5) und/oder mit einem Wärmetauscher (6) verbunden sind.

15. Vorrichtung nach mindestens einem der vorangehenden Ansprüche 3 bis 14, **dadurch gekennzeichnet**, daß ein mit dem Reaktor (1) thermisch gekoppelter Vorwärmer (5) vorgesehen ist, der einen Schadgasschacht (51) aufweist, der an seinen Seitenwänden Öffnungen (52) zum Absaugen flüchtiger Schadstoffe besitzt und der abluftseitig mit einer thermischen Nachbrennkammer (9) verbunden ist.

16. Vorrichtung nach Anspruch 14 oder 15, **dadurch gekennzeichnet**, daß die Brennkammer (54) eines Vorwärmers (5) zuluftseitig mit den abluftseitigen Öffnungen (42) der Reaktor-Brennkammer (16) und abluftseitig mit einem Wärmetauscher (6) verbunden ist.

17. Vorrichtung nach mindestens einem der Ansprüche 14 bis 16, **dadurch gekennzeichnet**, daß im Bereich der Deckfläche des Vorbrenners (5) eine Einrichtung (57) zur Zufuhr von Inertgas angeordnet ist.

18. Vorrichtung nach mindestens einem der vorangehenden Ansprüche 3 bis 17, **dadurch gekennzeichnet**, daß eine Einrichtung (47) zum Erfassen der Zusammensetzung und/oder der Temperatur des abgeleiteten Prozeßmediums vorhanden ist und diese Einrichtung (47) mit einem Regler zur Regelung der Zufuhr und/oder der Zusammensetzung des gas- oder dampfförmigen Prozeßmediums verbunden ist.

## Claims

1. Process for treating a trickling or flowing substance with an indirectly heated reactor which has a substantially vertically mounted reactor shaft whereby the substance to be treated is supplied through the top surface of the reactor shaft and the treated substance is discharged through the base surface of same wherein the interior of the reactor shaft contains guide devices for the substance to be treated and wherein at least one harmful gas shaft with openings in its side walls is mounted inside the reactor shaft wherein a gaseous or vaporous processing medium is introduced into the reactor shaft through a device mounted in the lower area of the reactor shaft,
characterised in that volatile substances are sucked out from the reactor shaft (10) through the openings (22) in the side walls (21) of the harmful gas shaft (20), that the processing medium is introduced into the reactor shaft (10) through a device (24; 31 to 33) separated from the harmful gas shaft (20) and circulates in counter flow round the substance to be treated and that the reactor shaft (10) is heated indirectly only on its outer side walls (11).

2. Process according to claim 1 characterised in that the harmful gas shaft (20) is divided into two superposed sections by a horizontal barrier (23) and that the gaseous or vaporous processing medium is supplied to the reactor shaft (10) through openings (24) in the side walls of the lower section and volatile substances are drawn off through openings (22) in the side walls of the upper section.

3. Apparatus for carrying out the process according to claim 1 or 2 characterised by a reactor (1) with a substantially vertically mounted reactor shaft (10) which is heated indirectly only on its outer side walls (11), the reactor shaft having a top surface (14) for the supply of substance to be treated and a base surface (12) for the discharge of treated substance and the inside of the reactor shaft having guide devices (13) as well as at least one harmful gas shaft (20) which has openings (22) in the side walls for drawing off the volatile substances,
and by devices (24, 31 to 33) for introducing a gaseous or vaporous processing medium mounted in the lower area of the reactor shaft (10) and separated from the harmful gas shaft (20).

4. Apparatus according to claim 3 characterised in that the harmful gas shaft (20) is divided by means of a horizontal barrier (23) into two superposed sections in which openings (22,24) are provided in the side walls.

5. Apparatus according to claim 3 or 4 characterised in that the device mounted in the lower area of the reactor shaft (10) consists of pipelines (31) with built-in nozzles (32) which are connected to a device for supplying a gaseous or vaporous processing medium.

6. Apparatus according to at least one of the preceding claims 3 to 5 characterised in that the harmful gas shaft (20) is connected on the exhaust air side to a thermal after-burner chamber (9).

7. Apparatus according to at least one of the preceding claims 3 to 6 characterised in that hot gases are directed from outside the reactor shaft (10) onto the side walls (11) thereof.

8. Apparatus according to at least one of the preceding claims 3 to 7 characterised in that sheet-type component parts (13) serving as guide devices extend inclined down from the side walls (21) of the harmful gas shaft (20) in the direction of the side walls (11) of the reactor shaft (10) and hang loose from the side walls (21) of the harmful gas shaft (20) with selectively different incline.

9. Apparatus according to claim 8 characterised in that the openings (22) of the harmful gas shaft (20) are mounted underneath the sheet-type components (13).

10. Apparatus according to at least one of the preceding claims 3 to 9 characterised in that a device (17) for supplying inert gas is mounted in the area of the top face (14) of the reactor (1).

11. Apparatus according to at least one of the preceding claims 3 to 10 characterised in that the harmful gas shaft (20) is mounted centrally inside the reactor shaft (20) running along the centre axis thereof and that the reactor shaft (10) as well as the harmful gas shaft (20) are shaped square or tubular.

12. Apparatus according to at least one of the preceding claims 3 to 11 characterised in that at least one reactor (1) is mounted in a reactor burner chamber (16) and that in the reactor burner chamber hot gases are directed from outside onto the side walls (11) of the at least one reactor shaft (10).

13. Apparatus according to claim 12 characterised in that in the reactor burner chamber (16) several reactors (1A, 1B. 1C) are mounted equally spaced from each other and diffusion burners (3) are arranged around the reactor shafts (10) and that between the reactors (1A, 1B,1C) as well as between the reactors (1A, 1B, 1C) and the side walls of the reactor burner chambers (16) guide inserts (35) are provided which direct the hot gases against the side walls (11) of the reactor shafts (10).

14. Apparatus according to claim 12 or 13 characterised in that the openings (42) of the reactor burner chamber on the exhaust gas side are connected to a preheater (5) and/or to a heat exchanger (6).

15. Apparatus according to at least one of the preceding claims 3 to 14 characterised in that a preheater (5) is provided thermally coupled to the reactor (1) and having a harmful gas shaft (51) which has in its side walls openings (52) for drawing off volatile harmful substances and which is connected on the used air side to a thermal after-burner chamber (9).

16. Apparatus according to claim 14 or 15 characterised in that the burner chamber (54) of a preheater (5) is connected on the air inlet side to the air outlet side openings (42) of the reactor burner chamber (16) and on the air outlet side to a heat exchanger (6).

17. Apparatus according to at least one of claims 14 to 16 characterised in that a device (57) for supplying inert gas is mounted in the area of the top surface of the preheater (5).

18. Apparatus according to at least one of the preceding claims 3 to 17 characterised in that a device (47) is provided for detecting the composition and/or temperature of the discharged processing medium and this device (47) is connected to a regulator for regulating the supply and/or composition of the gaseous or vaporous processing medium.

## Revendications

1. Procédé pour le traitement d'une substance à écoulement facile ou fluide avec un réacteur à chauffage indirect, qui présente un puits de réacteur disposé de manière sensiblement verticale, par la surface de couverture duquel la substance à traiter est admise et par la surface de fond duquel la substance traitée est évacuée, dont l'intérieur contient des dispositifs de guidage pour la substance à traiter et dans lequel est disposé un puits de gaz nocif qui présente des ouvertures sur ses parois latérales, un milieu de traitement à l'état gazeux ou de vapeur étant introduit dans le puits du réacteur par un dispositif disposé dans la région inférieure du puits du réacteur, caractérisé en ce que des substances volatiles sont aspirées hors du puits (10) du réacteur par les ouvertures (22) sur les parois (21) latérales du puits (20) de gaz nocif, en ce que le milieu de traitement est introduit dans le puits (10) du réacteur par un dispositif (24; 31 à 33) séparé du puits (20) de gaz nocif et circule à contre-courant autour de la substance à traiter et en ce que le puits (10) du réacteur n'est chauffé indirectement que sur ses parois (11) latérales extérieures.

2. Procédé selon la revendication 1, caractérisé en ce que le puits (20) de gaz nocif est divisé par un barrage (23) horizontal en deux sections disposées l'une au-dessus de l'autre et en ce que le milieu de traitement à l'état gazeux ou de vapeur est admis dans le puits (10) du réacteur par des ouvertures (24) dans les parois latérales de la section inférieure et les substances volatiles sont aspirées par des ouvertures (22) dans les parois latérales de la section supérieure.

3. Dispositif pour la mise en oeuvre du procédé selon la revendication 1 ou 2, caractérisé par un réacteur (1) ayant un puits (10) du réacteur disposé de manière sensiblement verticale, chauffé indirectement uniquement sur ses parois (11) latérales extérieures, qui présente une surface (14) de couverture pour l'admission de la substance à traiter et une surface (12) de fond pour l'évacuation de la substance traitée et à l'intérieur duquel sont disposés des dispositifs (13) de guidage ainsi qu'au moins un puits (20) de gaz nocif, qui présente des ouvertures (22) sur ses parois latérales pour l'aspiration de substances volatiles, et par des dispositifs (24, 31 à 33) séparés du puits (20) de gaz nocif et disposés dans la région inférieure du puits (10) du réacteur, destinés à l'introduction d'un milieu de traitement à l'état gazeux ou de vapeur.

4. Dispositif selon la revendication 3, caractérisé en ce que le puits (2o) de gaz nocif est divisé au moyen d'un barrage (23) horizontal en deux sections disposées l'une au-dessus de l'autre, dans les parois latérales desquelles des ouvertures (22, 24) sont prévues.

5. Dispositif selon la revendication 3 ou 4, caractérisé en ce que le dispositif disposé dans la région inférieure du puits (10) du réacteur est constitué de conduits (31) avec des tuyères (32) incorporées, qui sont reliés à un dispositif destiné à l'admission d'un milieu de traitement à l'état gazeux ou de vapeur.

6. Dispositif selon au moins une des revendications précédentes 3 à 5, caractérisé en ce que le puits (20) de gaz nocif est connecté du côté de l'évacuation de l'air à une chambre (9) de post-combustion thermique.

7. Dispositif selon au moins une des revendications précédentes 3 à 6, caractérisé en ce que les gaz de chauffage sont orientés de l'extérieur du puits (10) du réacteur vers ses parois (11) latérales.

8. Dispositif selon au moins des revendications précédentes 3 à 7, caractérisé en ce que les éléments (13) de construction de forme plate servant de dispositifs de guidage s'étendent obliquement vers le bas des parois (21) latérales du puits (20) de gaz nocif en direction des parois (11) latérales du puits (10) du réacteur, lesquels éléments (13) de construction sont suspendus de manière mobile aux parois (21) latérales du puits (20) de gaz nocif selon une inclinaison facultativement différente.

9. Dispositif selon la revendication 8, caractérisé en ce que les ouvertures (22) du puits (20) de gaz nocif sont disposées en dessous des éléments (13) de construction de forme plate.

10. Dispositif selon au moins des revendications précédentes 3 à 9, caractérisé en ce qu'un dispositif (17) destiné à l'admission de gaz inerte est disposé dans la région de la surface (14) de couverture du réacteur (1).

11. Dispositif selon au moins des revendications précédentes 3 à 10, caractérisé en ce que le puits (20) de gaz nocif est disposé centralement à l'intérieur du puits (10) du réacteur de manière à s'étendre le long de son axe médian, et en ce que le puits (10) du réacteur ainsi que le puits (20) de gaz nocif sont de forme parallélipipédique ou tubulaire.

12. Dispositif selon au moins des revendications précédentes 3 à 11, caractérisé en ce qu'au moins un réacteur est disposé dans une chambre (16) de combustion-réaction et en ce que dans la chambre (16) de combustion-réaction, des gaz de chauffage sont orientés de l'extérieur vers les parois (11) latérales d'au moins un (10) des puits du réacteur.

13. Dispositif selon la revendication 12, caractérisé en ce que dans la chambre (16) de combustion-réaction, plusieurs réacteurs (1A, 1B, 1C) sont disposés à égale distance les uns des autres et des brûleurs (3) de diffusion sont disposés autour des puits (10) du réacteur et en ce que des déflecteurs (35) de guidage, qui orientent les gaz de chauffage vers les parois (11) latérales des puits (10) du réacteur, sont prévues entre les réacteurs (1A, 1B, 1C) ainsi qu'entre les réacteurs (1A, 1B, 1C) et les parois latérales de la chambre (16) de combustion-réaction.

14. Dispositif selon la revendication 12 ou 13, caractérisé en ce que les ouvertures (42) du côté de l'évacuation de l'air de la chambre de combustion-réaction sont reliées à un préchauffage (5) et/ou à un échangeur (6) de chaleur.

15. Dispositif selon au moins des revendications précédentes 3 à 14, caractérisé en ce qu'il est prévu un préchauffage (5) thermiquement couplé au réacteur (1), lequel préchauffage (5) présente un puits (51) de gaz nocif qui possède des ouvertures (52) sur ses parois latérales pour aspirer des substances nocives volatiles et qui est relié du côté de l'évacuation de l'air à une chambre (9) de post-combustion thermique.

16. Dispositif selon la revendication 14 ou 15, caractérisé en ce que la chambre (54) de combustion d'un préchauffage (5) est reliée du côté de l'admission de l'air aux ouvertures (42) du côté de l'évacuation de l'air de la chambre (16) de combustion-réaction et du côté de l'évacuation de l'air avec un échangeur (6) de chaleur.

17. Dispositif selon au moins des revendications 14 à 16, caractérisé en ce qu'un dispositif (57) destiné à l'admission de gaz inerte est prévu dans la région de la surface de couverture du préchauffage (5).

18. Dispositif selon au moins des revendications précédentes 3 à 17, caractérisé en ce qu'un dispositif (47) destiné à détecter la composition et/ou la température du milieu de traitement déchargé est en place et ce dispositif (47) est relié à un régulateur destiné à réguler l'admission et/ou la composition du milieu de traitement à l'état gazeux ou de vapeur.
